# FASCICULE DE BREVET EUROPEEN

(11) **EP 3 725 200 B1**
(45) Date de publication et mention de la délivrance du brevet: **06.12.2023**
(21) Numéro de dépôt: 20170130.7
(22) Date de dépôt: 17.04.2020
(51) Int. Cl.: A47K 10/06, F24H 3/00, F24H 9/18, H05B 3/44, H05B 3/48, H05B 3/56, B29C 65/56, B29C 65/00, F24D 13/02

(54) **PROCEDE D'INSERTION D'UN CORDON CHAUFFANT DANS UN DISSIPATEUR THERMIQUE**
EINSETZVERFAHREN EINER HEIZLEITUNG IN EINEN KÜHLKÖRPER
METHOD FOR INSERTING A HEATING FLEX IN A HEAT SINK

(30) Priorité: 17.04.2019 FR 1904122
(43) Date de publication de la demande: 21.10.2020
(73) Titulaire: Texas De France, 13854 Aix en Provence (FR)
(72) Inventeur: VIENNET, Raphaël, 13100 AIX-EN-PROVENCE (FR); BLOUIN, Philippe, 13510 EGUILLES (FR)
(74) Mandataire: Roman, Alexis

(56) Documents cités:
- EP-A1- 3 096 094
- WO-A1-00/71940
- FR-A1- 2 985 654
- FR-A1- 3 035 485
- US-A- 2 944 138
- US-A- 5 743 330
- US-A1- 2011 052 160

## Description

### Domaine technique.

L'invention a pour objet un procédé d'insertion d'un cordon chauffant dans un dissipateur thermique. Elle concerne également un dissipateur thermique ainsi qu'un ensemble chauffant pour radiateur électrique.

L'invention se rapporte au domaine technique des appareils de chauffage électrique destinés à être installés dans une habitation ou des bureaux, et plus particulièrement, mais non exclusivement, le domaine technique des sèches-serviettes.

### Etat de la technique.

Un sèche-serviettes électrique comporte généralement un ou plusieurs barreaux de séchage creux renfermant un élément électrique chauffant.

Les éléments électriques chauffants présentent un intérêt croissant dans le domaine, notamment, en raison de leur rapide montée en température, permettant de réduire la durée de chauffage mais également d'obtenir une homogénéité thermique optimale pour le séchage des serviettes ou autres linges.

Les documents brevets FR3035485, US2994138, FR2985654, EP3096094, WO00/71940, US5743330 ou US2011/052160 décrivent divers procédés de fabrication d'éléments chauffants. Ces procédés ne sont toutefois pas optimisés pour une production de masse et les éléments chauffants obtenus peuvent, dans certains cas, avoir une conduction thermique médiocre.

Pour répondre aux normes en vigueur, les éléments chauffants également appelés corps de chauffe ou coeurs de chauffe, sont disposés dans les barres creuses et sont équipés d'une double isolation électrique.

On connait par le brevet FR1554549 (Texas), un procédé de montage d'un cordon chauffant dans un dissipateur thermique comportant un logement et un sabot. Dans ce brevet, le dissipateur thermique est formé de deux parties qui s'emboitent l'une dans l'autre afin de former un logement. Le cordon chauffant est d'abord emboité dans la première partie du dissipateur thermique puis, la seconde partie vient s'emboiter dans la première partie, refermant ainsi le logement autour du cordon chauffant.

Bien que l'utilisation d'un dissipateur thermique en deux parties semble intéressante puisqu'elle permet un assemblage facile du cordon chauffant dans le dissipateur thermique, celui-ci n'est pas adapté à une production automatisée et rapide. En effet, le fait d'avoir un dissipateur thermique en deux parties augmente le nombre de manipulations pour l'insertion du cordon chauffant dans le logement. De plus le fait d'avoir un dissipateur thermique en deux parties, augmente les coûts de fabrication et de matériau de celui-ci.

La présente invention a pour but de remédier à ces inconvénients. En particulier, l'invention a pour objectif de proposer un procédé permettant d'insérer le cordon chauffant dans le dissipateur thermique le plus rapidement possible et en un minimum d'étapes.

Un autre objectif de l'invention est l'assemblage du cordon chauffant et du dissipateur thermique permettant de diminuer le coût de production.

Un objectif supplémentaire de l'invention est de diminuer les coûts de fabrication du dissipateur thermique.

Encore un autre objectif de l'invention est de pouvoir automatiser l'insertion du cordon dans le logement du dissipateur thermique.

### Présentation de l'invention.

La solution proposée par l'invention est un procédé de montage d'un cordon chauffant dans un dissipateur thermique configuré pour être installé dans un barreau d'un sèche-serviettes électrique, lequel dissipateur thermique comporte un logement et un sabot. Ce procédé est remarquable en ce qu'il comprend les étapes consistant à :
- aménager une fente longitudinale dans le logement,
- conformer le dissipateur thermique de sorte que le logement comporte un berceau se prolongeant par des parois latérales disposées de part et d'autre du plan sagittal dudit dissipateur, lesquelles parois latérales présentent des extrémités libres définissant la fente longitudinale,
- aménager une zone de moindre épaisseur à la jonction de chaque paroi latérale et du berceau, laquelle zone forme une articulation ou une pliure permettant de refermer la fente longitudinale sur elle-même.
- utiliser un cordon chauffant souple ayant une gaine à double isolation électrique et l'insérer dans le logement, l'insertion étant réalisée depuis la fente longitudinale et à la refermer sur elle-même de manière à maintenir le cordon chauffant souple en position de manière permanente dans le logement.

La mise en oeuvre d'un tel procédé permet de simplifier l'insertion du cordon chauffant dans le dissipateur et de diminuer les coûts de fabrication, tout en assurant l'intégrité dudit cordon alors que celui-ci est souple et donc particulièrement vulnérable. En outre, les étapes de ce procédé peuvent parfaitement être automatisées puisque celui-ci comporte un nombre limité d'étapes.

D'autres caractéristiques avantageuses du procédé selon l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
Avantageusement, le procédé comprend les étapes consistant à placer le dissipateur thermique dans une matrice, la fente longitudinale étant dans une position ouverte autorisant l'insertion du cordon chauffant dans le logement et à refermer la fente longitudinale au moyen d'un poinçon, lequel poinçon coopère avec la matrice, de sorte que sous l'action dudit poinçon ladite fente se referme autour du cordon chauffant.

Un autre aspect de l'invention concerne un ensemble chauffant pour sèche-serviettes électrique comportant un cordon chauffant et un dissipateur thermique, lequel dissipateur thermique comprend un logement recevant le cordon chauffant, et un sabot. Cet ensemble chauffant est remarquable en ce que :
- le logement présente une fente longitudinale,
- le logement comporte un berceau se prolongeant par des parois latérales disposées de part et d'autre du plan sagittal dudit dissipateur, lesquelles parois latérales présentent des extrémités libres définissant la fente longitudinale,
- une zone de moindre épaisseur est aménagée à la jonction de chaque paroi latérale et du berceau, laquelle zone forme une articulation ou une pliure permettant de refermer la fente longitudinale sur elle-même,
- le cordon chauffant est un cordon souple ayant une gaine à double isolation électrique,
- le cordon chauffant souple est maintenu en position de manière permanente dans le logement par la fente longitudinale refermée sur elle-même.

Encore un autre aspect de l'invention concerne un dissipateur thermique comportant un logement et un sabot remarquable en ce que :
- le logement présente une fente longitudinale refermable sur elle-même,
- le logement comporte un berceau se prolongeant par des parois latérales disposées de part et d'autre du plan sagittal dudit dissipateur, lesquelles parois latérales présentent des extrémités libres définissant la fente longitudinale (38),
- chaque paroi latérale est reliée au berceau par une zone de moindre épaisseur formant une articulation ou une pliure.

D'autres caractéristiques avantageuses du dissipateur thermique selon l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, le dissipateur thermique se présente sous la forme d'une pièce monobloc.
- Selon un mode de réalisation, les parois latérales présentent une courbure.

Un aspect supplémentaire de l'invention concerne un sèche-serviettes électrique comportant au moins un barreau et un ensemble chauffant, installé dans ledit barreau. L'ensemble chauffant est remarquable en ce qu'il forme une pièce monobloc épousant la courbure interne du barreau.

Selon un mode de réalisation, chaque rail forme une étoile à au moins trois branches.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1a] illustre une première étape du procédé selon l'invention selon un premier mode de réalisation.
[Fig. 1b] illustre une deuxième étape du procédé selon l'invention selon un premier mode de réalisation.
[Fig. 1c] illustre une troisième étape du procédé selon l'invention selon un premier mode de réalisation
[Fig. 1d] illustre une quatrième étape du procédé selon l'invention selon un premier mode de réalisation.
[Fig. 1e] illustre une cinquième étape du procédé selon l'invention selon un premier mode de réalisation.
[Fig. 1f] illustre une sixième étape du procédé selon l'invention selon un premier mode de réalisation.
[Fig. 2a] illustre une première étape d'un procédé non couvert par l'invention selon un deuxième mode de réalisation.
[Fig. 2b] illustre une deuxième étape du procédé selon le deuxième mode de réalisation.
[Fig. 2c] illustre une troisième étape du procédé selon le deuxième mode de réalisation.
[Fig. 2d] illustre une quatrième étape du procédé selon le deuxième mode de réalisation.
[Fig. 2e] illustre une cinquième étape du procédé selon le deuxième mode de réalisation.
[Fig. 2f] illustre une sixième étape du procédé selon le deuxième mode de réalisation.
[Fig. 3a] illustre une première étape d'un procédé non couvert par l'invention selon un troisième mode de réalisation.
[Fig. 3b] illustre une deuxième étape du procédé selon le troisième mode de réalisation.
[Fig. 3c] illustre une troisième étape du procédé selon le troisième mode de réalisation.
[Fig. 3d] illustre une quatrième étape du procédé selon le troisième mode de réalisation.
[Fig. 3e] illustre une cinquième étape du procédé selon le troisième mode de réalisation.
[Fig. 3f] illustre une sixième étape du procédé selon le troisième mode de réalisation.
[Fig. 4a] illustre une première étape d'un procédé non couvert par l'invention selon un quatrième mode de réalisation.
[Fig. 4b] illustre une deuxième étape du procédé selon le quatrième mode de réalisation.
[Fig. 4c] illustre une troisième étape du procédé selon le quatrième mode de réalisation.
[Fig. 4d] illustre une quatrième étape du procédé selon le quatrième mode de réalisation.
[Fig. 4e] illustre une cinquième étape du procédé selon le quatrième mode de réalisation.
[Fig. 4f] illustre une sixième étape du procédé selon le quatrième mode de réalisation.
[Fig. 5a] est une vue en perspective d'un barreau d'un sèche-serviettes.
[Fig. 5b] est une vue en perspective du barreau de la figure 5a dans lequel est installé un ensemble chauffant conforme à l'invention.

### Description des modes de réalisation.

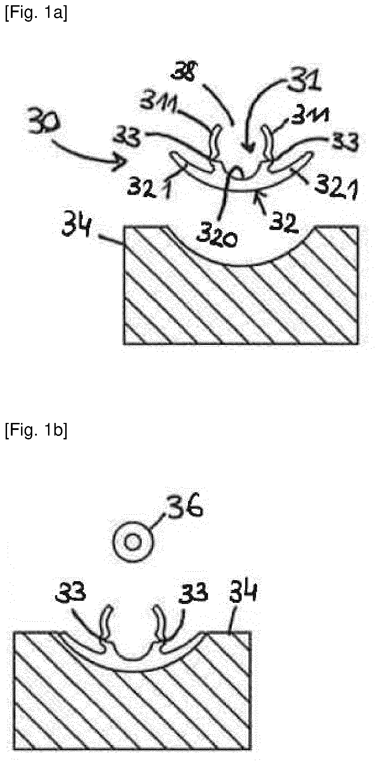

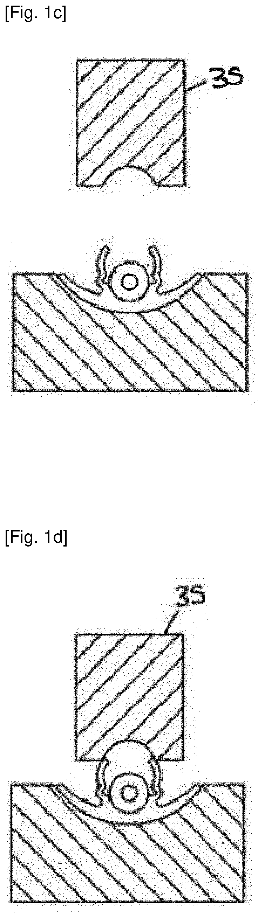

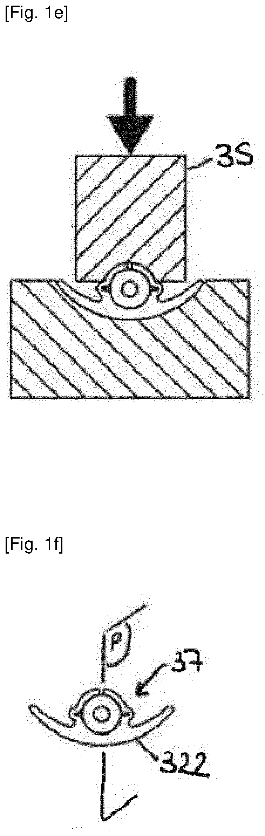

La figure 1 illustre un dispositif permettant de mettre en oeuvre un mode préféré de réalisation du procédé objet de l'invention. Les différentes étapes sont détaillées aux figures 1a à 1f.

La figure 1a présente une matrice 34 et un dissipateur thermique 30. Le dissipateur thermique 30 comporte un sabot 32 et un logement 31 qui forment avantageusement une pièce monobloc extrudée, moulée ou usinée. Le logement 31 présente un berceau 320 en forme de portion de cylindre qui se prolonge par des parois latérales 311 disposées de part et d'autre du plan sagittal P (figure 1f) du dissipateur thermique (30). Le logement 31 est adapté pour recevoir un cordon chauffant 36. Le berceau 320 n'est pas nécessairement en forme de portion de cylindre, il peut par exemple se présenter sous la forme d'un profilé de section carrée, rectangulaire, ovale, ou autre, mais cela diminue la surface de contact assurant la conduction thermique. Sur la figure 1a, les parois latérales 311 se font face et sont disposées symétriquement par rapport au plan sagittal P du dissipateur thermique 30. Les parois latérales 311 sont de courbure identique ou similaire à la courbure du cordon chauffant 36. Les parois latérales 311 sont séparées à leur extrémité supérieure par une fente longitudinale 38 s'étendant sur toute la longueur du dissipateur thermique 30. Le sabot 32 présente une ou plusieurs ailettes 321 s'étendant de part et d'autre du berceau 320, de telles sorte qu'elles soient symétriques par rapport au plan sagittal P du dissipateur thermique 30. Les ailettes 321 apportent une courbure spécifique à la face externe 322 du dissipateur thermique 30. Dans ce mode de réalisation préféré, chaque paroi 311 est reliée au berceau 320 par une zone de moindre épaisseur 33 formant une articulation ou une pliure. La structure interne de la matrice 34 est adaptée pour être de courbure identique ou similaire à la courbure interne du barreau 39 du sèche-serviettes.

La figure 1b représente le dissipateur thermique 30 placé dans la matrice 34 et le cordon chauffant 36 avant son insertion dans le logement 31.

La figure 1c présente l'étape d'insertion du cordon chauffant 36 dans le berceau 320 du logement 31. Les parois latérales 311 sont en position écartée, de part et d'autre du cordon chauffant 36. A cette étape, le logement 31 est encore dans une conformation où la fente longitudinale 38 est ouverte.

Sur la figure 1d, le poinçon 35 vient se placer en regard de la fente longitudinale 38 située entre les parois latérales 311 du logement 31.

La figure 1e présente l'étape dans laquelle le poinçon 35 vient refermer la fente longitudinale 38 de sorte que les parois latérales 311 du logement 31 entourent le cordon chauffant 36. Le poinçon 35 contraint les extrémités libres des parois latérales 311 et exerce une pression de telle sorte que la zone de moindre épaisseur 33 va permettre de faire pivoter les parois latérales 311 pour que la fente longitudinale se referme autour du cordon chauffant 36 sans déformer lesdites parois latérales. La fonction de pivot permet la fermeture de la fente longitudinale 38 autour du cordon chauffant 36 tout en conservant la courbure initiale des parois latérales 311. Le poinçon 35 contraint les extrémités libres des parois latérales 311 du logement 31 de sorte qu'elles se déplacent en direction de l'axe longitudinal du dissipateur 30 et viennent épouser le cordon 36. La matrice 34 permet de maintenir en place le dissipateur thermique 30 afin que, lors de l'insertion du cordon chauffant 36 dans le logement 31, la courbure de la face externe 322 du sabot 32 ne se déforme pas.

La figure 1f présente l'ensemble chauffant 37 composé du dissipateur thermique 30 et du cordon chauffant 36 maintenu en position dans le berceau 320 du logement 31.

Le cordon chauffant 36 se présente avantageusement sous la forme d'un cordon souple ayant une gaine à double isolation électrique. Le cordon chauffant 36 a préférentiellement une section circulaire et une épaisseur comprise entre 1 mm et 8 mm, cette épaisseur étant inférieure à celle du barreau 39 du sèche-serviettes.

Ce mode de réalisation est celui préféré puisqu'il permet d'assurer l'intégrité du cordon chauffant 36 en y exerçant peu de pression lors d'une production de masse. Le cordon chauffant 36 ne sera pas écrasé, abîmé ou déformé lors de la fermeture de la fente longitudinale 38 autour de lui. La courbure de la face externe 322 du sabot 32 est également garantie pour assurer la conduction thermique entre le cordon chauffant 36 et le barreau 39 du sèche-serviettes.

Le dissipateur thermique 30 a pour rôle de maintenir le cordon chauffant 36 en place dans le barreau 39 du sèche-serviettes mais également de dissiper l'énergie thermique dudit cordon. Le dissipateur thermique 30 recouvre tout ou partie du cordon chauffant 36. Plus la surface de contact entre le cordon chauffant 36 et le dissipateur thermique 30 est grande, meilleure sera la conduction thermique entre ces deux éléments.

Le dissipateur thermique 30 se présente sous la forme d'une pièce monobloc ce qui permet de diminuer le coût de matière mais également le coût de production. Celui-ci est formé par moulage, matriçage ou extrusion d'un matériau rigide tel que l'acier ou l'aluminium par exemple. Le temps d'assemblage est également réduit puisqu'il n'y a que deux pièces à assembler (le dissipateur thermique 30 monobloc et le cordon chauffant 36).

Le dissipateur thermique 30 s'étend dans toute la longueur du barreau 39 du sèche-serviettes.

Le rayonnement du dissipateur thermique 30 peut être amplifié par un traitement de la surface. Ce traitement de surface peut être de type anodisation ou peinture matte qui augmente l'émissivité du dissipateur thermique 30. Le transfert d'énergie par rayonnement thermique est fortement amélioré par rapport à une surface d'aluminium brut qui a une émissivité plus faible.

Les dimensions du dissipateur thermique 30 sont semblables à celles du barreau 39 du sèche-serviettes dans lequel il est placé. A titre d'exemple, sa longueur varie entre 15 cm et 150 cm, sa hauteur (distance allant du sabot 32 à l'extrémité des parois latérales 311) varie de 5 mm à 20 mm, et sa largueur (dimension du sabot 32) varie entre 5 mm et 5 cm.

Les parois 311 du logement 31 se referment autour du cordon chauffant 36 pour le maintenir en place et permettre la conduction thermique entre le cordon chauffant 36 et le sabot 32. Celles-ci permettent également d'assurer l'intégrité physique du cordon chauffant 36.

Les zones de moindre épaisseur 33 permettent d'assurer le pivot des parois latérales 311 du logement 31 d'une position écartée à une position refermée. Le dissipateur thermique 30 passe ainsi d'un logement 31 ouvert à un logement 31 refermé autour du cordon chauffant 36 sans risque d'endommager celui-ci.

Le sabot 32 permet la conduction thermique entre le cordon chauffant 36 et le barreau 39 du sèche-serviettes. La face externe 322 du sabot 32 présente une courbure complémentaire de celle du barreau 39 du sèche-serviettes afin d'augmenter au maximum la surface de contact entre le dissipateur thermique 30 et le barreau 39.

La matrice 34 présente une empreinte dont la forme est complémentaire de celle du sabot 32. La matrice 34 a la même conformation que la courbure interne du barreau 39 du sèche-serviettes dans lequel le dissipateur thermique 30 vient se loger. L'empreinte de la matrice 34 permet de maintenir le dissipateur thermique 30 lors de la mise en place du cordon chauffant 36 dans le logement 31. La courbure de la face externe 322 du sabot 32 est donc constante pendant tout le procédé. La matrice 34 a la même conformation que la courbure interne du barreau 39 du sèche-serviettes dans lequel le dissipateur thermique 30 vient se loger. Le poinçon 35 permet d'exercer un effort sur les parois 311 du logement 31 afin de les refermer autour du cordon chauffant 36 de sorte que la fente longitudinale 38 séparant les parois 311 du logement 31 soit refermée. La matrice 34 et le poinçon 35 coopèrent afin de mettre en forme le dissipateur thermique 30.

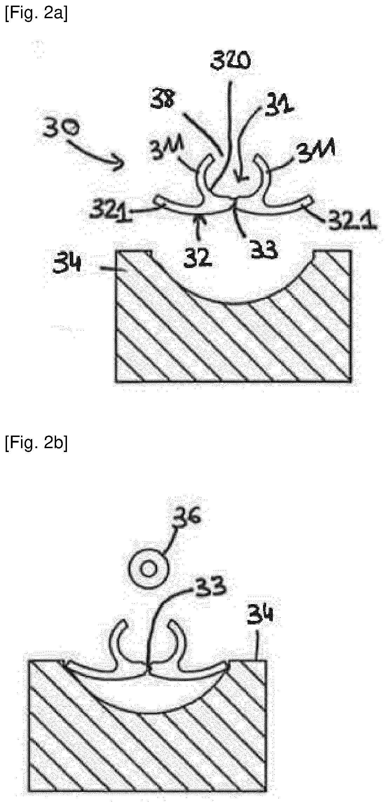

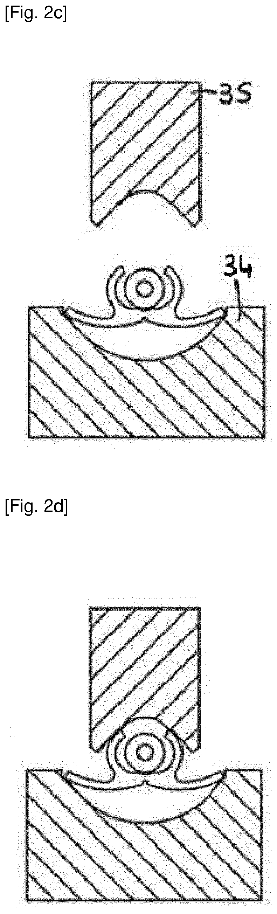

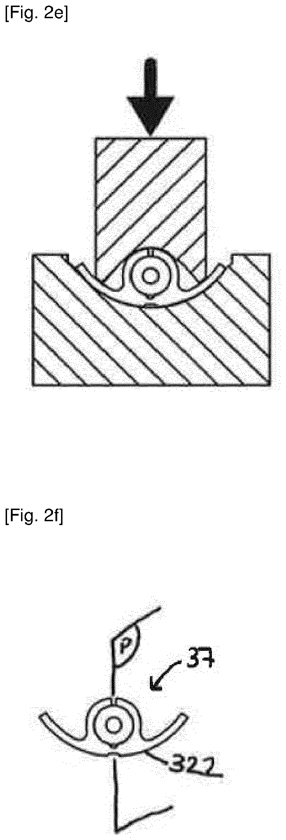

La figure 2 illustre un dispositif permettant de mettre en oeuvre un deuxième mode de réalisation d'un procédé d'insertion du cordon chauffant 36 dans un dissipateur thermique. Les différentes étapes sont détaillées aux figures 2a à 2f.

La figure 2a présente une matrice 34 et un dissipateur thermique 30. Le dissipateur thermique 30 comporte un sabot 32 et un logement 31 qui forment une pièce monobloc extrudée, moulée ou usinée. Le logement 31 présente un berceau 320 qui se prolonge par des parois latérales 311, lequel logement est adapté pour recevoir un cordon chauffant 36. Les parois latérales 311 se font face et sont disposées symétriquement par rapport au plan sagittal P (figure 2f) du dissipateur thermique 30. Les parois latérales 311 sont séparées à leur extrémité supérieure par une fente longitudinale 38 s'étendant sur toute la longueur du dissipateur thermique 30. Le sabot 32 présente une ou plusieurs ailettes 321 s'étendant de part et d'autre du berceau 320 de telle sorte qu'elles soient symétriques par rapport au plan sagittal P du dissipateur thermique 30. Lesdites ailettes 321 apportent une courbure spécifique à la face externe 322 du dissipateur thermique 30. Dans ce mode de réalisation préféré, le sabot 32 comporte en son centre une zone de moindre épaisseur 33 formant une articulation ou une pliure permettant de faire pivoter les ailettes 321 du sabot 32. La zone de moindre épaisseur 33 se trouve sur l'axe longitudinal, en vis-à-vis de la fente longitudinale 38. La structure interne de la matrice 34 est adaptée pour être complémentaire à la courbure de la face externe 322 du dissipateur thermique 30.

La figure 2b représente le dissipateur thermique 30 placé dans la matrice 34 et le cordon chauffant 36 avant son insertion dans le logement 31.

La figure 2c présente l'étape d'insertion du cordon chauffant 36 dans le berceau 320 du logement 31. Les parois latérales 311 sont en position écartée, de part et d'autre du cordon chauffant 36. A cette étape, le logement 31 est encore dans une conformation où la fente longitudinale 38 est ouverte.

Sur la figure 2d, le poinçon 35 vient se placer en regard de la fente longitudinale 38 située entre les ailettes 321 du sabot 32.

La figure 2e présente l'étape dans laquelle le poinçon 35 vient refermer la fente longitudinale 38 de sorte que les parois latérales 311 du logement 31 entourent le cordon chauffant 36. Le poinçon 35 contraint les extrémités libres des parois latérales 311 et exerce une pression de telle sorte que la zone de moindre épaisseur 33 va permettre aux ailettes 321 de se déplacer en direction de l'axe longitudinal. Ainsi, les extrémités libres des parois latérales 311 se rapprochent de manière à ce que la fente longitudinale 38 se referme. Le sabot 32 se courbe afin que sa face externe 322 soit complémentaire à la courbure du barreau 39 du sèche-serviettes. Le logement 31 est ainsi refermé autour du cordon chauffant 36 sans que les parois latérales 311 ne soient déformées. La matrice 34 permet de maintenir en place le dissipateur thermique 30 afin que, lors de l'insertion du cordon chauffant 36 dans le logement 31, la courbure de la face externe 322 du sabot 32 prenne la courbure souhaitée.

La figure 2f présente l'ensemble chauffant 37 composé du dissipateur thermique 30 et du cordon chauffant 36 maintenu en position dans le berceau 320 du logement 31.

Ce mode de réalisation ne permet pas de garantir la précision de la courbure de la face externe 322 du sabot 32 en production de masse. Cette perte de précision de la courbure entraine des variations de la conduction thermique qui sont préjudiciables pour le bon fonctionnement du sèche-serviettes.

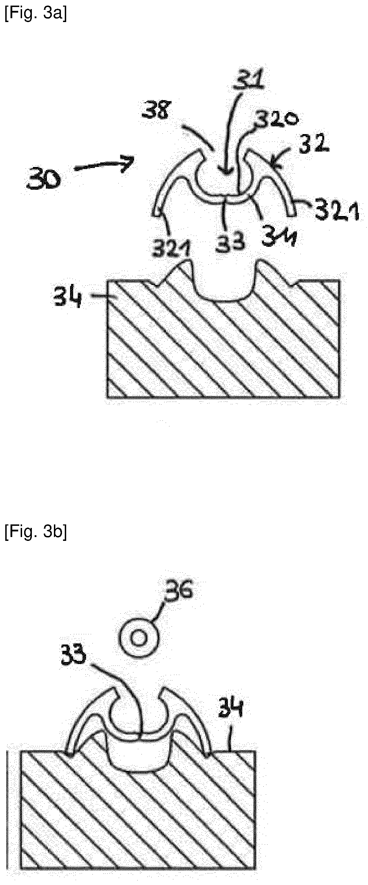

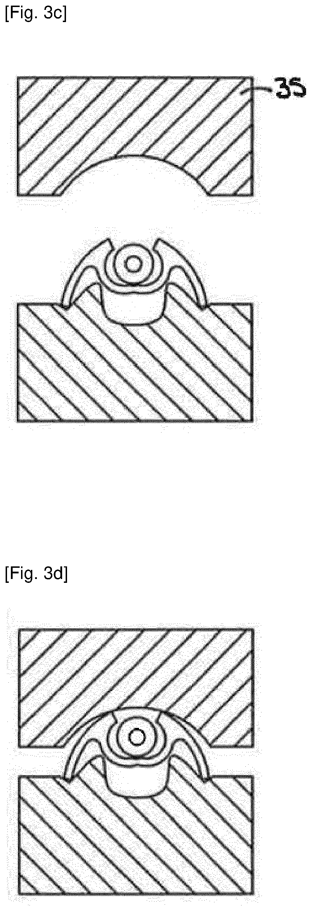

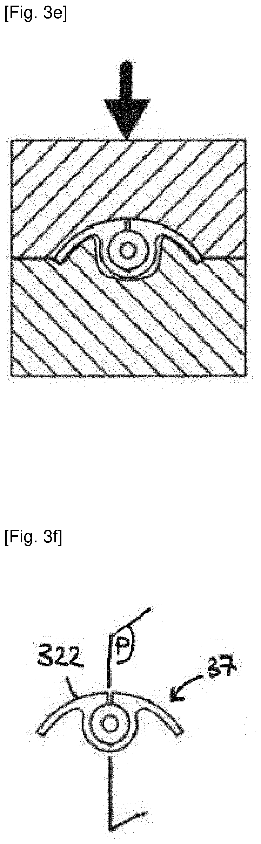

La figure 3 illustre un dispositif permettant de mettre en oeuvre un troisième mode de réalisation d'un procédé d'insertion du cordon chauffant 36 dans un dissipateur thermique. Les différentes étapes sont détaillées aux figures 3a à 3f.

La figure 3a présente une matrice 34 et un dissipateur thermique 30. Le dissipateur thermique 30 comporte un sabot 32 et un logement 31 qui forment une pièce monobloc extrudée, moulée ou usinée. Dans ce mode de réalisation, le logement 31 présente une seule paroi 311 formant le berceau 320. La paroi 311 comporte en son centre une zone de moindre épaisseur 33 située en regard de la fente longitudinale. Cette zone de moindre épaisseur 33 formant une articulation ou une pliure permettant de faire refermer ladite paroi 311 sur elle-même. Les extrémités de la paroi 311 sont reliées aux ailettes 321 du sabot 32. Dans ce mode de réalisation, la fente longitudinale 38 est aménagée dans le sabot 32, dans le plan sagittal P (figure 3f) du dissipateur 30, de telle sorte qu'elle sépare les ailettes 321 qui s'étendent de part et d'autre de celle-ci. La fente longitudinale 38 se trouve en regard de la zone de moindre épaisseur 33. Dans ce mode de réalisation, la conformation de la matrice 34 est complémentaire de la courbure du logement 31.

La figure 3b représente le dissipateur thermique 30 placé dans la matrice 34 et le cordon chauffant 36.

La figure 3c présente l'étape d'insertion par la fente longitudinale 38, du cordon chauffant 36 dans le berceau 320 du logement 31. A cette étape, le logement 31 est encore dans une conformation où la fente longitudinale 38 est ouverte.

Sur la figure 3d, le poinçon 35 vient se placer en regard de la fente longitudinale 38 située entre les ailettes 321 du sabot 32.

La figure 3e présente l'étape dans laquelle le poinçon 35 vient refermer la fente longitudinale 38.
Le poinçon 35 entre en contact avec les ailettes 321 du sabot 32 et exerce une pression de telle sorte que la zone de moindre épaisseur 33 située sur la paroi 311 du logement 31 va permettre aux ailettes 321 du sabot 32 de se rapprocher de l'axe sagittal P afin de fermer le logement 31 autour du cordon chauffant 36. La structure interne du poinçon 35 est adaptée pour être de courbure identique à la courbure interne du barreau 39 du sèche-serviettes. Le sabot 32 prendra alors la conformation dans laquelle la courbure de sa face externe 322 soit complémentaire à la courbure du poinçon 35.

La figure 3f présente l'ensemble chauffant 37 composé du dissipateur thermique 30 et du cordon chauffant 36 maintenu en position dans le berceau 320 du logement 31.

Ce mode de réalisation permet d'assurer l'intégrité des parois 311 du logement 31. Ce mode de réalisation ne permet cependant pas, de garantir la précision de la courbure de la face externe 322 du sabot 32 en production de masse. Cette perte de précision de la courbure entraine des variations de la conduction thermique préjudiciables pour le bon fonctionnement du sèche-serviettes.

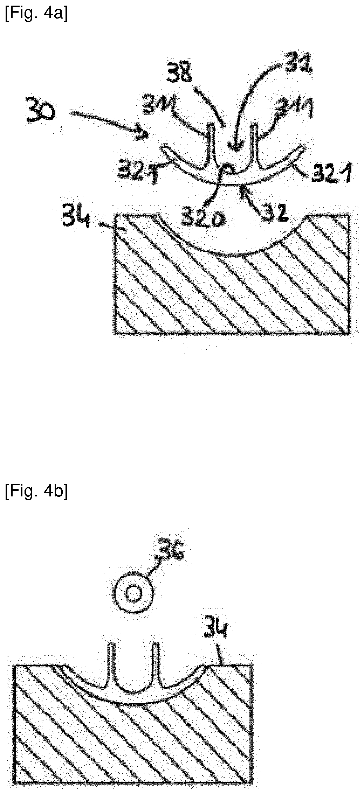

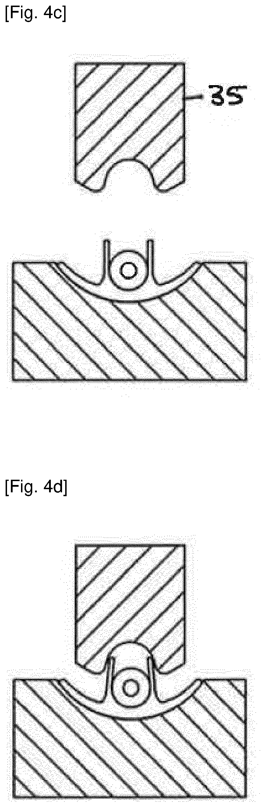

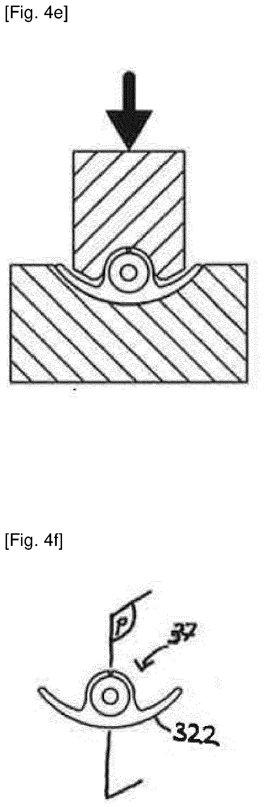

La figure 4 illustre un dispositif permettant de mettre en oeuvre un quatrième mode de réalisation d'un procédé d'insertion du cordon chauffant 36 dans un dissipateur thermique. Les différentes étapes sont détaillées aux figures 4a à 4f.

La figure 4a présente une matrice 34 et un dissipateur thermique 30. Le dissipateur thermique 30 comporte un sabot 32 et un logement 31 qui forment une pièce monobloc extrudée, moulée ou usinée. Le logement 31 présente un berceau 320 qui se prolonge par des parois latérales 311 adaptées pour recevoir un cordon chauffant 36. Les parois latérales 311 sont séparées à leur extrémité supérieure par une fente longitudinale 38. Celles-ci se font face et sont disposées symétriquement par rapport au plan sagittal P du dissipateur thermique 30. Dans ce mode de réalisation, les parois 311 du logement 31 sont droites, fines et facilement déformables. Le sabot 32 présente une ou plusieurs ailettes 321 s'étendant de part et d'autre du berceau 320 de sorte qu'elles soient symétriques par rapport au plan sagittal P. Les ailettes 321 apportent une courbure spécifique à la face externe 322 du dissipateur thermique 30. La structure interne de la matrice 34 est adaptée pour être identique à la courbure interne du barreau 39 du sèche-serviettes.

La figure 4b représente le dissipateur thermique 30 placé dans la matrice 34 et le cordon chauffant 36 avant son insertion dans le logement 31.

La figure 4c présente l'étape d'insertion du cordon chauffant 36 dans le berceau 320 du logement 31. Les parois latérales 311 sont de part et d'autre du cordon chauffant 36. A cette étape, le logement 31 est encore en conformation dans laquelle la fente longitudinale 38 est ouverte, avec les parois latérales 311 droites et non déformées.

Sur la figure 4d, le poinçon 35 vient se placer en regard de la fente longitudinale 38 située entre les parois latérales 311 du logement 31.

La figure 4e présente l'étape dans laquelle le poinçon 35 vient refermer la fente longitudinale 38 de sorte que les parois latérales 311 du logement 31 entourent le cordon chauffant 36. Le poinçon 35 contraint les extrémités libres des parois latérales 311 et exerce une pression de telle sorte que les parois latérales 311 vont se déformer et se courber afin de venir enfermer le cordon chauffant 36 dans le logement 31 par fermeture de la fente longitudinale 38. La matrice 34 permet de maintenir en place le dissipateur thermique 30 afin que, lorsque le poinçon 35 exerce l'effort de pression sur les parois latérales 311, la face externe 322 du dissipateur thermique 30 ne se déforme pas et conserve sa courbure idéale.

La figure 4f présente l'ensemble chauffant 37 composé du dissipateur thermique 30 et du cordon chauffant 36 maintenu en position dans le berceau 320 du logement 31.

Ce mode de réalisation permet de conserver une courbure idéale de la face externe 322 du sabot 32. Ce mode de réalisation ne permet cependant pas, de garantir l'intégrité du cordon chauffant 36. De plus afin de pouvoir facilement déformer les parois latérales 311 du logement 31 sans qu'elles ne déforment ou endommagent le cordon chauffant 36, celles-ci doivent être amincies ce qui diminue la conduction thermique.

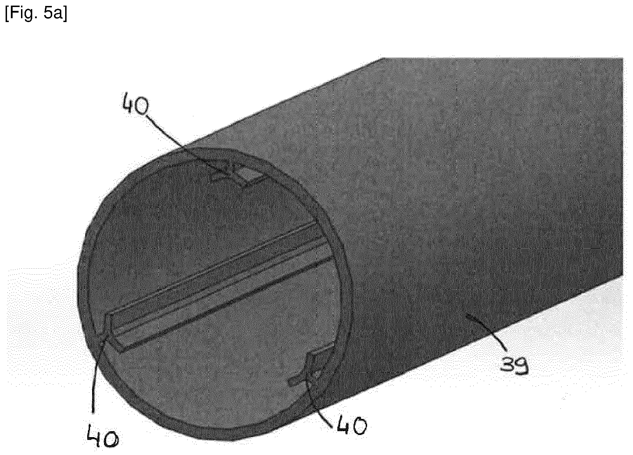

La figure 5a représente une vue en perspective d'un barreau 39 d'un sèche-serviettes de section circulaire. Sur la face interne du barreau 39 des rails 40 sont extrudés avec le barreau 39 ou fixés par soudure ou collage au barreau 39 à égale distance les uns des autres. Les rails 40 assurent le guidage de l'ensemble chauffant 37 lors de son insertion dans le barreau 39. Les rails 40 ont préférentiellement une forme d'étoile à trois branches, lesquelles branches permettent de maintenir en position l'ensemble chauffant 37 dans le barreau 39. Leur disposition permet de choisir l'emplacement du dissipateur thermique à l'intérieur du barreau 39 en fonction de son montage sur le sèche-serviettes.

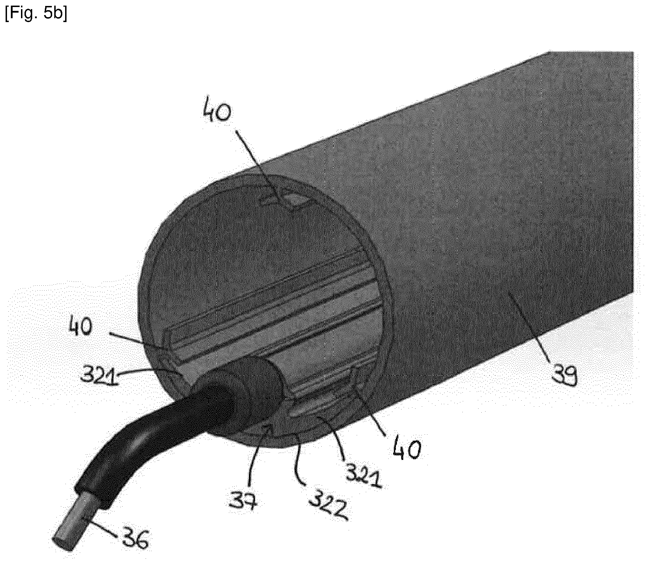

La figure 5b représente un ensemble chauffant 37 inséré dans un barreau 39 de sèche-serviettes. L'ensemble chauffant 37 est inséré dans le barreau 39 de telle sorte qu'il soit disposé entre deux rails 40. L'ensemble chauffant 37 forme une pièce monobloc dont la courbure de la face externe 322 épouse la courbure interne du barreau 39. Une branche de chaque rail 40 permet de bloquer en position le dissipateur thermique 30 dans le barreau 39. Le dissipateur 30 est ainsi plaqué contre la face interne du barreau 39, optimisant la conduction thermique entre ces deux éléments.

Les ailettes 321 du dissipateur 30 se logent dans les branches des rails 40. Les branches peuvent être repliées manuellement ou automatiquement contre les ailettes 321 pour assurer un maintien en position efficace de l'ensemble chauffant 37 à l'intérieur du barreau 39.

L'agencement des différents éléments et/ou moyens et/ou étapes de l'invention, dans les modes de réalisation décrits ci-dessus, ne doit pas être compris comme exigeant un tel agencement dans toutes les implémentations. Notamment :
- le dissipateur thermique 30 n'est pas nécessairement en aluminium extrudé, mais peut être en acier, en fonte, en aluminium ou en cuivre ;
- le dissipateur thermique 30 n'est pas nécessairement formé par extrudage, moulage, matriçage ou emboutissage, mais peut également être formé par usinage ;
- le dissipateur thermique n'est pas nécessairement en aluminium extrudé, mais peut également être en matériau composite ;
- le logement 31 et le sabot 32 peuvent se présenter en deux pièces distinctes assemblées ensemble, par exemple, par soudage ou collage ;
- le cordon chauffant 36 n'a pas nécessairement une section circulaire mais pourrait également avoir une section carrée, rectangulaire, ovale ou autre ;
- les ailettes 321 ne présentent pas nécessairement une courbure mais peuvent également être plates dans le cas d'une insertion dans un barreau 39 de section carrée ou rectangulaire ;
- le barreau 39 du sèche-serviettes n'est pas nécessairement de section circulaire mais peut également avoir une section carrée, rectangulaire, ovale ou autre ;
- la face externe 322 du sabot 32 n'est pas nécessairement arrondie mais peut être adaptée à la face interne du barreau 39 de manière à obtenir une surface de contact maximale entre le sabot 32 et le barreau.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation.

## Revendications

1. Procédé de montage d'un cordon chauffant (36) dans un dissipateur thermique (30) configuré pour être installé dans un barreau (39) d'un sèche-serviettes électrique, lequel dissipateur thermique comporte un logement (31) et un sabot (32) **caractérisé en ce que** ledit procédé comprend les étapes consistant à :
- aménager une fente longitudinale (38) dans le logement (31) ;
- conformer le dissipateur thermique (30), en matériau rigide tel que par exemple en acier, aluminium, fonte, cuivre ou en matériau composite, de sorte que le logement (31) comporte un berceau (320) se prolongeant par des parois latérales (311) disposées de part et d'autre du plan sagittal (P) dudit dissipateur, lesquelles parois latérales (311) présentent des extrémités libres définissant la fente longitudinale (38),
- aménager une zone de moindre épaisseur (33) à la jonction de chaque paroi latérale (311) et du berceau (320), laquelle zone forme une articulation ou une pliure permettant de refermer la fente longitudinale (38) sur elle-même,
- utiliser un cordon chauffant (36) souple ayant une gaine à double isolation électrique et l'insérer dans le logement (31), l'insertion étant réalisée depuis la fente longitudinale (38) ;
- refermer la fente longitudinale (38) sur elle-même de manière à maintenir le cordon chauffant (36) souple en position de manière permanente dans le logement (31).

2. Procédé selon la revendication 1, comprenant les étapes consistant à :
- placer le dissipateur thermique (30) dans une matrice (34), la fente longitudinale (38) étant dans une position ouverte autorisant l'insertion du cordon chauffant (36) dans le logement (31),
- refermer la fente longitudinale (38) au moyen d'un poinçon (35), lequel poinçon coopère avec la matrice (34), de sorte que sous l'action dudit poinçon ladite fente se referme autour du cordon chauffant (36).

3. Ensemble chauffant (37) pour sèche-serviettes électrique comportant :
- un cordon chauffant (36)
- un dissipateur thermique (30) comprenant :
-- un logement (31) recevant le cordon chauffant (36) ;
-- un sabot (32) ;
**caractérisé en ce que** :
- le logement (31) présente une fente longitudinale (38),
- le logement (31) comporte un berceau (320) se prolongeant par des parois latérales (311) disposées de part et d'autre du plan sagittal (P) dudit dissipateur en matériau rigide tel que par exemple en acier, aluminium, fonte, cuivre ou en matériau composite, lesquelles parois latérales (311) présentent des extrémités libres définissant la fente longitudinale (38),
- une zone de moindre épaisseur (33) étant aménagée à la jonction de chaque paroi latérale (311) et du berceau (320), laquelle zone forme une articulation ou une pliure permettant de refermer la fente longitudinale (38) sur elle-même,
- le cordon chauffant (36) est un cordon souple ayant une gaine à double isolation électrique,
- le cordon chauffant (36) souple étant inséré dans le logement (31),
- le cordon chauffant (36) souple étant maintenu en position de manière permanente dans le logement (31) par la fente longitudinale (38) refermée sur elle-même.

4. Ensemble chauffant selon la revendication 3, **caractérisé en ce que** le dissipateur est en aluminium.

5. Utilisation d'un dissipateur thermique (30) en matériau rigide tel que par exemple en acier, aluminium, fonte, cuivre ou en matériau composite, pour la mise en oeuvre du procédé de montage d'un cordon chauffant (36) selon la revendication 1 ou 2.

6. Utilisation selon la revendication 5, **caractérisée en ce que** le dissipateur (30) comporte un logement (31) et un sabot (32), et **en ce que** :
- le logement (31) présente une fente longitudinale (38) refermable sur elle-même,
- le logement (31) comporte un berceau (320) se prolongeant par des parois latérales (311) disposées de part et d'autre du plan sagittal (P) dudit dissipateur, lesquelles parois latérales (311) présentent des extrémités libres définissant la fente longitudinale (38).

7. Utilisation selon la revendication 6, **caractérisée en ce que** le dissipateur thermique (30) se présente sous la forme d'une pièce monobloc.

8. Utilisation selon la revendication 6 ou 7, **caractérisée en ce que** les parois latérales (311) présentent une courbure.

9. Sèche-serviettes électrique comportant au moins un barreau (39) et un ensemble chauffant (37) selon la revendication 3 ou 4, installé dans ledit barreau (39),
- le barreau (39) comporte au moins deux rails (40) de maintien de l'ensemble chauffant (37),
- l'ensemble chauffant (37) forme une pièce monobloc épousant la courbure interne du barreau (39).

10. Sèche-serviettes électrique selon la revendication 9 **caractérisé en ce que** chaque rail forme une étoile à au moins trois branches.

## Patentansprüche

1. Verfahren zur Montage einer Heizleitung (36) in einem Wärmeableiter (30), der dazu ausgestaltet ist, in einen Stab (39) eines elektrischen Handtuchtrockners eingebaut zu werden, der Wärmeableiter beinhaltet eine Aufnahme (31) und einen Schuh (32), **dadurch gekennzeichnet, dass** das Verfahren die Schritte umfasst, die in Folgendem bestehen:
- Ausbilden eines Längsspalts (38) in der Aufnahme (31);
- Formen des Wärmeableiters (30) aus starrem Werkstoff wie beispielsweise Stahl, Aluminium, Gusseisen, Kupfer oder Verbundwerkstoff, so dass die Aufnahme (31) eine Mulde (320) beinhaltet, die in Seitenwände (311) übergeht, die beidseits der Sagittalebene (P) des Ableiters angeordnet sind, wobei die Seitenwände (311) freie Enden aufweisen, die den Längsspalt (38) definieren,
- Ausbilden eines Bereichs von geringerer Dicke (33) an der Übergangsstelle jeder Seitenwand (311) und der Mulde (320), wobei der Bereich ein Gelenk oder einen Knick bildet, das bzw. der es ermöglicht, den Längsspalt (38) gegen sich selbst zu schließen,
- Verwenden einer flexiblen Heizleitung (36), die einen Mantel mit doppelter elektrischer Isolierung besitzt, und Einführen von dieser in die Aufnahme (31), wobei das Einführen von dem Längsspalt (38) aus erfolgt;
- Schließen des Längsspalts (38) gegen sich selbst, so dass die flexible Heizleitung (36) in der Aufnahme (31) dauerhaft in Position gehalten wird.

2. Verfahren nach Anspruch 1,umfassend die Schritte, die in Folgendem bestehen:
- Legen des Wärmeableiters (30) in eine Matrize (34), wobei der Längsspalt (38) in einer geöffneten Position ist, die das Einführen der Heizleitung (36) in die Aufnahme (31) zulässt,
- Schließen des Längsspalts (38) mittels eines Stempels (35), wobei der Stempel mit der Matrize (34) zusammenwirkt, so dass sich der Spalt unter der Einwirkung des Stempels um die Heizleitung (36) herum schließt.

3. Heizanordnung (37) für einen elektrischen Handtuchtrockner, beinhaltend:
- eine Heizleitung (36)
- einen Wärmeableiter (30), umfassend:
- eine Aufnahme (31), die die Heizleitung (36) aufnimmt;
- einen Schuh (32);
**dadurch gekennzeichnet, dass**:
- die Aufnahme (31) einen Längsspalt (38) aufweist,
- die Aufnahme (31) eine Mulde (320) beinhaltet, die in Seitenwände (311) übergeht, die beidseits der Sagittalebene (P) des Ableiters aus starrem Werkstoff wie beispielsweise Stahl, Aluminium, Gusseisen, Kupfer oder Verbundwerkstoff angeordnet sind, wobei die Seitenwände (311) freie Enden aufweisen, die den Längsspalt (38) definieren,
- wobei ein Bereich von geringerer Dicke (33) an der Übergangsstelle jeder Seitenwand (311) und der Mulde (320) ausgebildet ist, wobei der Bereich ein Gelenk oder einen Knick bildet, das bzw. der es ermöglicht, den Längsspalt (38) gegen sich selbst zu schließen,
- die Heizleitung (36) eine flexible Leitung ist, die einen Mantel mit doppelter elektrischer Isolierung besitzt,
- wobei die flexible Heizleitung (36) in die Aufnahme (31) eingeführt wird,
- wobei die flexible Heizleitung (36) in der Aufnahme (31) durch den gegen sich selbst geschlossenen Längsspalt (38) dauerhaft in Position gehalten wird.

4. Heizanordnung nach Anspruch 3, **dadurch gekennzeichnet, dass** der Ableiter aus Aluminium ist.

5. Verwendung eines Wärmeableiters (30) aus starrem Material wie beispielsweise Stahl, Aluminium, Gusseisen, Kupfer oder Verbundwerkstoff zur Umsetzung des Verfahrens zur Montage einer Heizleitung (36) nach Anspruch 1 oder 2.

6. Verwendung nach Anspruch 5, **dadurch gekennzeichnet, dass** der Ableiter (30) eine Aufnahme (31) und einen Schuh (32) beinhaltet, und dadurch, dass:
- die Aufnahme (31) einen Längsspalt (38) aufweist, der gegen sich selbst schließbar ist,
- die Aufnahme (31) eine Mulde (320) beinhaltet, die in Seitenwände (311) übergeht, die beidseits der Sagittalebene (P) des Ableiters angeordnet sind, wobei die Seitenwände (311) freie Enden aufweisen, die den Längsspalt (38) definieren.

7. Verwendung nach Anspruch 6, **dadurch gekennzeichnet, dass** der Wärmeableiter (30) in Form eines einstückigen Teils vorliegt.

8. Verwendung nach Anspruch 6 oder 7, **dadurch gekennzeichnet, dass** die Seitenwände (311) eine Krümmung aufweisen.

9. Elektrischer Handtuchtrockner, umfassend mindestens einen Stab (39) und eine Heizanordnung (37) nach Anspruch 3 oder 4, die in den Stab (39) eingebaut ist,
- der Stab (39) umfasst mindestens zwei Schienen (40) zum Halten der Heizanordnung (37),
- die Heizanordnung (37) bildet ein einstückiges Teil, das an die innere Krümmung des Stabs (39) angepasst ist.

10. Elektrischer Handtuchtrockner nach Anspruch 9, **dadurch gekennzeichnet, dass** jede Schiene einen Stern mit mindestens drei Zacken bildet.

## Claims

1. Method for mounting a heater cord (36) in a heatsink (30) configured to be installed inside a rung (39) of an electrically-heated towel rail, which heatsink comprises a housing (31) and a shoe (32), **characterized in that** said method comprises the steps consisting in:
- creating a longitudinal slot (38) in the housing (31) ;
- shaping the heatsink (30), which is made of a rigid material such as, for example, steel, aluminium, cast iron, copper or composite material, in such a way that the housing (31) comprises a cradle (320) extended by lateral walls (311) positioned one on each side of the sagittal plane (P) of said heatsink, which lateral walls (311) have free ends defining the longitudinal slot (38),
- creating a reduced-thickness zone (33) at the junction where each lateral wall (311) meets the cradle (320), which zone forms an articulation or a fold allowing the longitudinal slot (38) to be closed back on itself,
- using a flexible heater cord (36) having an electrically double-insulated sheath and inserting it in the housing (31), insertion being performed from the longitudinal slot (38);
- closing the longitudinal slot (38) back on itself so as to hold the flexible heater cord (36) permanently in position in the housing (31).

2. Method according to Claim 1, comprising the steps consisting in:
- placing the heatsink (30) in a die (34), the longitudinal slot (38) being in an open position that allows the heater cord (36) to be inserted in the housing (31),
- closing the longitudinal slot (38) using a punch (35), which punch collaborates with the die (34) so that under the action of said punch said slot is closed back around the heater cord (36).

3. Heating assembly (37) for an electrically-heated towel rail, comprising:
- a heater cord (36)
- a heatsink (30) comprising:
- a housing (31) accepting the heater cord (36);
- a shoe (32);
**characterized in that**:
- the housing (31) has a longitudinal slot (38),
- the housing (31) comprises a cradle (320) extended by lateral walls (311) positioned one on each side of the sagittal plane (P) of said heatsink, which is made of a rigid material such as, for example, steel, aluminium, cast iron, copper or composite material, which lateral walls (311) have free ends defining the longitudinal slot (38),
- a reduced-thickness zone (33) being formed at the junction where each lateral wall (311) meets the cradle (320), which zone forms an articulation or a fold allowing the longitudinal slot (38) to be closed back on itself,
- the heater cord (36) is a flexible cord having an electrically double-insulated sheath,
- the flexible heater cord (36) being inserted in the housing (31),
- the flexible heater cord (36) being permanently held in position in the housing (31) by the longitudinal slot (38) closed back on itself.

4. Heating assembly according to Claim 3, **characterized in that** the heatsink is made of aluminium.

5. Use of a heatsink (30) made of a rigid material such as, for example, steel, aluminium, cast iron, copper or composite material, for implementing the method for mounting a heater cord (36) according to Claim 1 or 2.

6. Use according to Claim 5, **characterized in that** the heatsink (30) comprises a housing (31) and a shoe (32), and **in that**:
- the housing (31) has a longitudinal slot (38) that can be closed back on itself,
- the housing (31) comprises a cradle (320) extended by lateral walls (311) positioned one on each side of the sagittal plane (P) of said heatsink, which lateral walls (311) have free ends defining the longitudinal slot (38).

7. Use according to Claim 6, **characterized in that** the heatsink (30) takes the form of a one-piece part.

8. Use according to Claim 6 or 7, **characterized in that** the lateral walls (311) have a curvature.

9. Electrically-heated towel rail comprising at least one rung (39) and a heating assembly (37) according to Claim 3 or 4, installed in said rung (39),
- the rung (39) comprises at least two retaining rails (40) for holding the heating assembly (37),
- the heating assembly (37) forms a one-piece part conforming to the internal curvature of the rung (39) .

10. Electrically-heated towel rail according to Claim 9, **characterized in that** each retaining rail forms a star having at least three arms.
